# NEW EUROPEAN PATENT SPECIFICATION

(11) **EP 0 689 652 B2**
(45) Date of publication and mention of the opposition decision: **19.03.2003**
(45) Mention of the grant of the patent: 20.05.1998
(21) Application number: 94911329.4
(22) Date of filing: 01.03.1994
(51) Int. Cl.: F16K 17/06, F16K 31/126

(54) **SELF-ACTUATING CONTROL VALVE**
AUTOMATISCHES STEUERVENTIL
SOUPAPE DE COMMANDE AUTOMATIQUE

(30) Priority: 19.03.1993 SE 9300932
(43) Date of publication of application: 03.01.1996
(73) Proprietor: Tour & Andersson Hydronics Aktiebolag, 520 30 Ljung (SE)
(72) Inventor: NYKOM, Nils, S-500 04 Boras (SE); TORSTENSSON, Alvar, S-502 47 Boras (SE)
(74) Representative: Siebmanns, Hubertus
(86) International application number: SE9400176
(87) International publication number: WO94021949

(56) References cited:
- EP-A- 451 326
- EP-A- 0 451 326
- DE-A- 3 708 166
- DE-C- 3 325 715

## Description

The present invention relates to an automatic adjustment valve of the type described in the preamble of patent claim 1.

Such valves which are generally known in this technical field can be used in a heating or cooling system and they are to be designed to maintain the level of the differential pressure as constant as possible. This has so far not been possible in a satisfactory way or not at all, as to a change of the level of differential pressure in operation. Another problem has been that certain parts have had a limited life or a tendency to cause break downs. An additional disadvantage has been deficiences as to multifunctional directions.

EP-A- 0 451 326 relates to a known pressure regulating valve, designed to be connected between on one hand a storage container and a pump and on the other hand a container for dispensing a foodstuff liquid. Consequently, this known valve belongs to another technical field and is in important respects not applicable as to the valve set forth in the preamble of claim 1 according to the present invention. In this known valve the spindle is surrounded by a rotary tube, the outer side of which, which is positioned in the valve body, is designed with an outer thread, on which a stop element is axially displaceable but not rotatably mounted, against which stop element a compression spring with its one end abuts, which spring surrounds the tube as well as the spindle. The other end of the compression spring actuates a membrane disc, which is designed integral with the spindle at its end mounted in the valve body. The membrane is actuated only on one of its sides by the liquid to be controlled, whereas the other side communicates with the surrounding atmosphere. Accidental overpressures in the feed or main pipe can not be received by the membrane, since it is positioned close to the membrane disc, which when a pressure actuation takes place at the same time actuates the valve cone, because the latter follows all membrane movements in the two directions.

The object of the present invention is to counteract and if possible remove the abovementioned difficulties as well as to suggest an automatic adjustment valve, which also in additional respects is improved.

This object is attained in accordance with the present invention by means of a valve of the type described in the introduction, which valve is characterized by what is set forth in the characterizing clause of patent claim 1.

Additional characterizing features and advantages of the present invention are described more in detail in the following description, reference being made to the accompanying drawings, which show non-limiting embodiments, partly schematicly:
Fig. 1 shows a flow and assembling diagram for a heating or cooling system, which includes a valve according to the invention;
Fig. 2 shows, enlarged, the lower part of the diagram according to Fig. 1, with the valve according to the invention and its connections;
Fig. 3 is a diametrical longitudinal section of a valve according to the invention, which corresponds to the valve shown in a lateral view in Fig. 2; and
Fig. 4 shows a key designed to alter the level of the differential pressure in the valve according to Figs. 1-3.

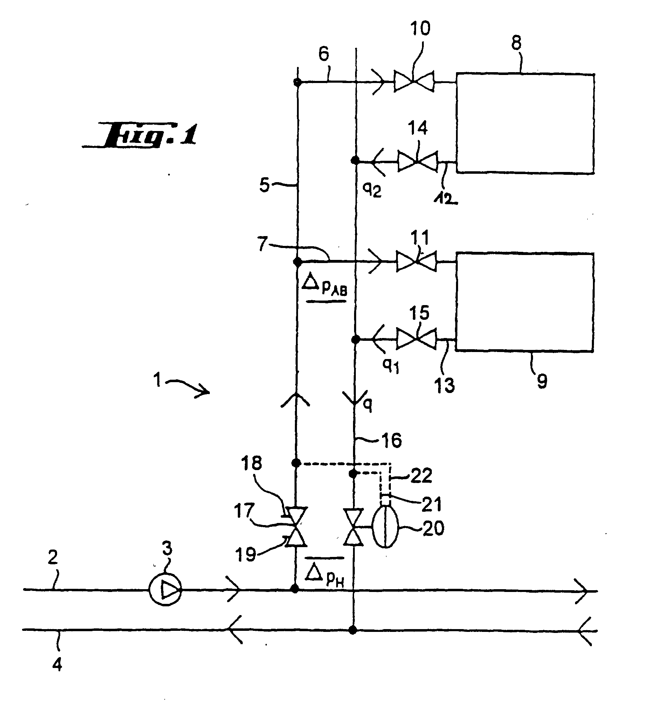

A heating or cooling system 1 is shown schematicly in its entirety in Fig. 1. This system comprises a feed pipe 2 with a circulation pump 3 connected into it as well as a return pipe 4. From the feed pipe a feed line 5 extends via connections 6 and 7 to radiators 8 and 9 respectively via thermostat valves 10 and 11 respectively. Check valves, remote-controlled or manually adjustable, can be used instead of said thermostat valves. Return connections 12 and 13 extend from the radiators and can also or alternatively be provided with check valves or the like, 14 and 15 and end in a return line 16, which in its turn end in said return pipe 4.

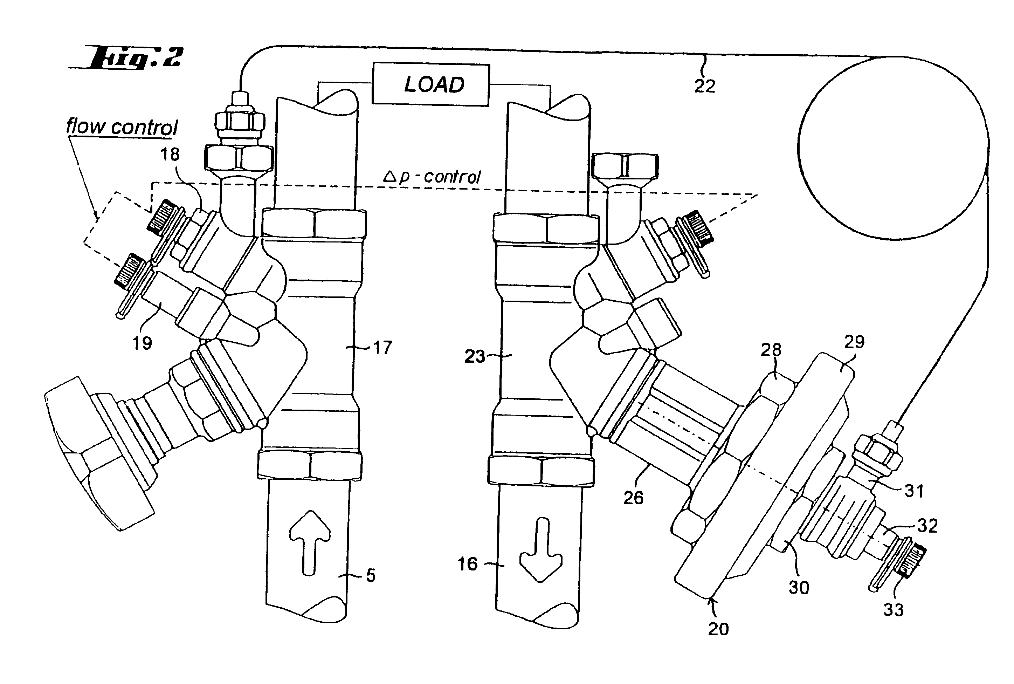

A flow control valve 17 having measuring and/or tapping holes 18, 19 is connected in said feed line 5. In the return line 16 an automatic adjustment valve 20 according to the present invention is connected, suitably within the same area. The side of this valve, which is turned to said return line 16 is connected to the return line via apipe, duct or the like 21 and its side, which is turned away from the return line is connected to feed line 5 via a pipe, duct or the like 22. Said connections can as to parts in question be integrated into an existing valve body or a connection can be done directly to the respective line. A preferred embodiment is shown in Fig. 2.

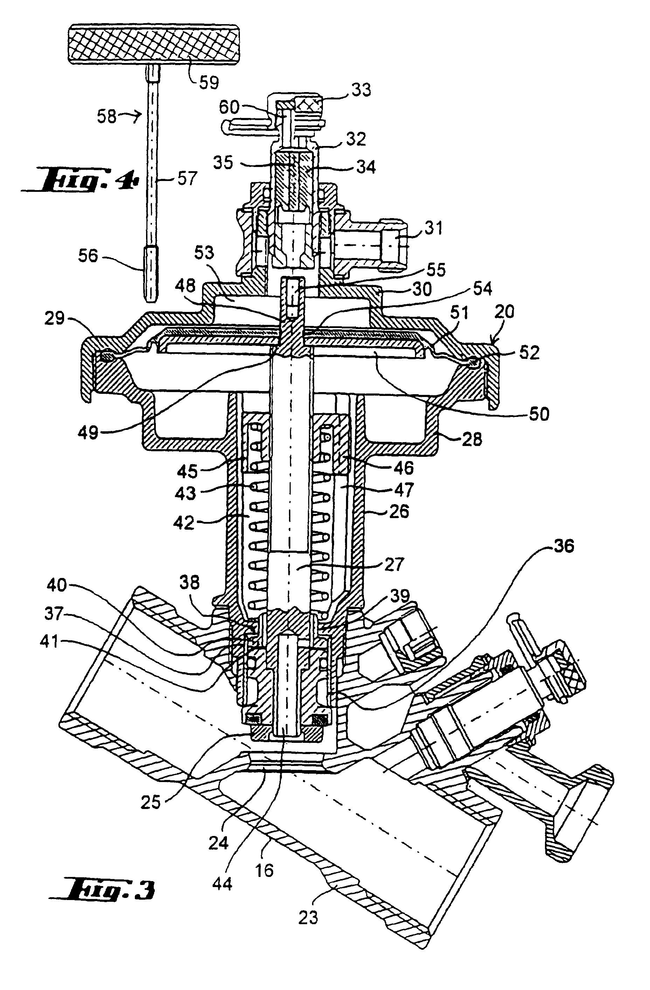

Valve 20 in Fig. 3 comprises a body 23, which constitutes a part of return line 16 and has a seat 24, which interacts with a valve cone 25, applied to the lower end of a spindle 27, inserted in a top piece 26 of the valve. Top piece 26 of the valve is threaded into body 23 and is provided with a cup-shaped widening 28 at its end, which is turned away from the body, which widening is circumvented by a lid 29 having a central addition 30, which accomodates a side connection 31 for said line or the like 22. However, said addition is also provided with a central axial connection 32, which normally is closed from outside by means of a screw cap 33 and which encloses a rubber element 34 having a central axial, normally compressed or obliterated gap 35, through which a measuring probe (not shown) can be inserted in order to connect a measuring equipment (not shown), known per se.

Cone 25 suitably is inserted in a plastic tube 36 in an axial opening 37 in top piece 26 of the valve, which opening is limited in the direction away from the return line by a bottom 38 having a central axial hole 39, into which a holder 40 is inserted, which within the opening locks tube 36 through friction by means of a disc portion 41, which within hole 39 will guide spindle 27 and which in a chamber 42 at a distance from bottom 38 in the top piece of the valve will function as a holder or locating assignment for a preferably helical compression spring 43, which extends axially through chamber 42 and surrounds spindle 27, which with play extends through holder 40. Within this area the spindle is provided with a channel 44, which extends from e.g. cavity in holder 40 to the free end surface of cone 25, chamber 42 in this way always communicating with the return line. Spring 43 is supported by bottom 38 and abuts with its other end an adjustable stop element 45, which is threaded onto the spindle and clasps by means of e.g. a fork-like side 46 a longitudinal web 47 on the interior side of the top piece of the valve in the valve chamber. Thus, the stop element is mounted in such a way, that it can be displaced in a longitudinal direction but not be rotated on the spindle within the chamber.

Upper end 48 of spindle 27 has e.g. a circular cross-section and a reduced diameter, designed to form a step 49, on which a membrane disc 50 is supported, which extends in a radial direction in relation to the spindle. On the membrane disc a membrane 51 is supported in its turn, the shaped edge 52 of which is retained between cup edge 28 and lid 29. In this way chamber 42 is separated from a secondary chamber 53 in addition 30, in which the spindle end terminates freely or blindly and from which said pipe 22 starts. Said membrane is loosely supported by the membrane disc, preferably with a special shape around the disc edge and is also loosely supported about spindle end 48, and in this way it is possible to lift the membrane from the disc and let it slide with its central hole 54 along spindle end 48. Free end 48 of the spindle is provided with e.g. a hexagonal hole 55 in order to receive an end 56, designed in a corresponding way, on a shaft 57 of a tool 58, designed to adjust the level of the differential pressure. The tool has a hand wheel 59 at the opposite end of the shaft.

The control of the differential pressure is done via pipes 21 and 22, the desired level of differential pressure between the feed line and the return line being maintained and kept constant. Thus, the upper side of the membrane is actuated by the pressure from the feed line and the membrane actuates via the membrane disc the spindel against the action of spring 43, the valve cone being adjusted to the actual "excess pressure level". In case this level is to be altered, this can be done in operation. The screw cap on the addition is removed and the tool is inserted into the rubber element and through it into the spindle cavity. The tool is subsequently turned, which causes the spindle to turn in relation to the stop element, the latter then occupying a higher or lower position with a spring pressure, which has been correspondingly altered as a result. The membrane is counteracted from now on by a higher or lower spring pressure, which results in an altered adjustment of the cone and then also an altered flow rate through the seat.

In certain systems and at certain moments it is suitable to close the valve completely. This can be done by lowering connection or nipple 32, which has been threaded into addition 30, towards the spindle end and by lowering the latter, until the cone abuts the seat. In order to achieve this a hexagonal hole 60 has been made in the upper end of nipple 32 and in this way a key (not shown) can be introduced. The membrane does not have to participate in this closing movement, since it is not attached to the membrane disc. In case the membrane would have been attached to the membrane disc, this had posed a hazard that the membrane might have been broken due to considerable strains. In case e.g. pipe 22 is to be closed temporarily or removed, the secondary chamber maybe will be without pressure. Since the membrane is allowed to slide along the spindle end, there is no risk that dangerous stresses will develop and generally the membrane is able, thanks to the described design, to handle also considerable overpressures without problems.

The membrane can alternatively be attached to, e. g. vulcanized onto the membrane disc. Also, it is of course possible to let the valve cone, by a corresponding rotation of the valve spindle, occupy an intermediate position resulting in an adequate checking effect on the liquid flow through the flow passage.

## Claims

1. An automatic adjustment valve (20) designed to maintain at a constant level the differential pressure in a heating or cooling system (1), which valve (20) suitably is connected into a return line (16) of the system (1) between one or several radiators (8,9) and a main return pipe (4) and which via a pipe (22) is connected to a feed line (5) of the system (1) between a feed pipe (2) and said radiators (8, 9), said valve (20) comprising: a valve body (23), a top piece (26), which is connected to the valve body (23), a spindle (27) mounted within said valve body (23) and said top piece (26) and having a valve cone (25) at one end designed to interact with a seat (24) in said valve body (23), said spindle (27) being surrounded by a compression spring (43), which is supported by an axially displaceable but not rotatable stop element (45) and said spindle (27) supporting a membrane (51 ), which via a membrane disc (50) acts on the spindle (27) in its closing direction against the action of said spring (43), **characterized in that** the stop element (45) is threaded onto the spindle (27) in order to be able to alter its axial position relative to the spindle (27) by means of a tool (58) which transfers rotary movement from outside the valve to the spindle, **in that** the spindle (27) extends through the membrane (51) and is adjustable in a predetermined way in operation by means of said tool (58) through a rotation in relation to the stop element (45), **in that** the membrane (51 ) is loosely supported or is attached to the disc (50), and **in that** the membrane (51) and the membrane disc (50) or a unit, which comprises the membrane and the membrane disc, are displaceably mounted in an axial direction on the other end (48) of the spindle (27) in order to be lifted and to slide with a central hole (54) along said other spindle end (48), and **in that** the top piece (26) of the valve is threaded into the valve body (23) and is provided at its end, which is turned away from said body, with a cup-shaped widening (28), which is enclosed by a lid (29) having a central addition (30), which includes a lateral connection (31) for said pipe (22), and **in that** the addition also has a central axial connection (32), which normally is closed from outside.

2. A valve according to claim 1, **characterized in that** said central axial connection (32), which normally is closed from outside by means of a screw cap (33), houses a rubber element (34) having a central, axial, normally compressed or obliterated gap (35), through which a measuring probe can be inserted in order to connect a measuring equipment.

3. A valve according to claim 1 or 2, **characterized in that** said cone (25) is inserted into a plastic tube (36) in an axial opening (37) in the top piece (26) of the valve, which opening is limited in a direction away from the return line by a bottom (38) having a central axial hole (39), in which a holder (40) is inserted, which within the opening locks said tube (36) by friction by means of a disc portion (41), which within the hole (39) functions as a guide for the spindle (27), and which in a chamber (42) beyond the bottom (38) in the top piece of the valve can act as a holder or a locating assignment for the compression spring (43), which extends axially through said chamber (42) and surrounds the spindle (27), which with play extends through said holder (40).

4. A valve according to claim 3, **characterized in that** the spindle within the area of the holder (40) is provided with a channel (44), which extends from e.g. the area within a cavity in the holder (40) to the free end surface of the cone (25) in order to always allow communication between the chamber (42) and the return line.

5. A valve according to claim 3, **characterized in that** the spring (43) is supported by the bottom (38), abutting with the other end against the adjustable stop element (45), which clasps by means of a fork-like side (46) around a longitudinal web (47) on the interior side of the top piece of the valve in the valve chamber.

6. A valve according to claim 3, **characterized in that** the other end (48) of the spindle (27) has a circular cross-section and a reduced diameter in order to form a step (49), on which the membrane disc (50) is supported, which extends radially in relation to the spindle, **in that** the membrane (51) in its turn is supported by the membrane disc, the shaped edge (52) of the membrane being retained between a cup edge (28) and a lid (29) and the membrane being designed to separate the chamber (42) from a secondary chamber (53) in an addition (30), in which the spindle end is terminated freely or without connection and from which the pipe (22) extends.

7. A valve according to claim 6, **characterized in that** the other end (48) of the spindle is provided with a hexagonal hole (55), designed to receive an end (56), designed in a corresponding way, of a shaft (57) of a tool (58) for an adjustment of the level of differential pressure.

8. A valve according to any of claims 1-7, **characterized in that** in order to close the valve entirely the central connection (32), which is threaded into the addition (30), is designed to be lowered towards the other end of the spindle in order to move it downwards, until the cone abuts the seat, and for that reason a hexagonal opening (60) is made in the upper end of the central connection (32) to be able to introduce a key, the membrane not being allowed to follow this closing movement, since it is not attached to the membrane disc, but it is allowed to slide along said spindle end in order to avoid dangerous stresses and eliminate possibly substantial overpressures.

9. A valve according to claim 1, **characterized in that** the membrane (51) has a special shape, which encloses the disc edge.

## Patentansprüche

1. Automatisches Steuerventil (20) zur Konstanthaltung eines Differenzdruckniveaus in einem Heiz- oder Kühlsystem (1), welches Ventil (20) vorzugsweise in eine Rücklaufleitung (16) des Systems (1) eingeschaltet ist zwischen einem oder mehreren Radiatoren (8, 9) und einer Hauptrücklaufleitung (4), und welches Ventil über eine Leitung (22) an einen Speisezweig (5) des Systems (1) angeschlossen ist zwischen einer Vorlaufleitung (2) und genannten Radiatoren (8, 9), wobei das Ventil (20) ein Ventilgehäuse (23), ein Überstück (26), welches an das Ventilgehäuse (23) angeschlossen ist, eine Spindel (27), die in genanntem Ventilgehäuse (23) und genanntem Überstück (26) angeordnet ist, und einen Ventilkörper (25) an einem Ende aufweist, der zum Zusammenwirken mit einem Sitz (24) in genanntem Ventilgehäuse (23) vorgesehen ist, wobei die Spindel (27) von einer Druckfeder (43) umgeben ist, die von einem axial verschiebbaren, jedoch nicht drehbaren Stopporgan (45) getragen ist, und welche Spindel (27) eine Membrane (51) stützt, welche über einen Membranteller (50) auf die Spindel (27) in ihrer Schließrichtung gegen die Wirkung genannter Feder (43) einwirkt, **dadurch gekennzeichnet, daß** das Stopporgan (45) auf die Spindel (27) aufgeschraubt ist, um seine axiale Lage im Verhältnis zur Spindel (27) ändern zu können mittels eines Werkzeuges (58), welches Drehbewegungen von der Außenseite des Ventils auf die Spindel überträgt, indem die Spindel (27) sich durch die Membrane (51) erstreckt und auf vorbestimmte Weise im Betrieb einstellbar ist mittels genannten Werkzeuges (58) durch eine Rotation im Verhältnis zum Stopporgan (45), daß die Membrane (51) vom Ventilteller (50) lose getragen oder an diesem befestigt ist, und daß die Membrane und der Membranteller (50) oder eine Einheit, welche die Membrane und den Membranteller umfaßt, in axialer Richtung am anderen Ende (48) der Spindel (27) angeordnet ist bzw. sind, um anhebbar zu sein und mit einem zentralen Loch (54) an genanntem anderen Spindelende (48) entlangzugleiten, und daß das Überstück (26) des Ventils auf das Ventilgehäuse (23) geschraubt und an dem von genanntem Gehäuse abgewendeten Ende mit einer schalenförmiger Erweiterung (28) versehen ist, die von einem Deckel mit einem zentralen Aufbau (30) verschlossen ist, welcher einen Seitenanschluß (31) für genannte Leitung (22) besitzt,

2. Ventil nach Anspruch 1, **dadurch gekennzeichnet, daß** der Aufbau auch einen zentralen axialen Anschluß (32) besitzt, der normalerweise durch einen Schraubdeckel (33) von außen verschlossen ist, und der einen Gummikörper (34) mit einem zentralen axialen, normalerweise zusammengedrückten oder ausgelöschten Spalt (35) beherbergt, durch welchen Spalt eine Meßsonde zum Anschluß von Meßausrüstung einführbar ist.

3. Ventil nach Anspruch 1 oder 2, **dadurch gekennzeichnet, daß** der Ventilkörper (25) in eine Kunststoffhülse (36) in einer axialen Öffnung (37) im Ventilüberstück (26) eingesetzt ist, welche Öffnung in Richtung weg vom Rücklaufzweig von einem Boden (38) mit einem zentralen axialen Loch (39) begrenzt ist, in welches ein Halter (40) eingeführt ist, der innerhalb der Öffnung die Hülse (36) durch Reibung arretiert mittels einem Tellerteil (41), welcher in dem Loch (39) als Führung für die Spindel (27) wirkt, und welcher in einer Kammer (42) über den Boden (38) hinaus im Ventilüberstück als ein Halter oder eine Lokalisierungsanweisung für die Druckfeder (43) wirken kann, welche sich axial durch die Kammer (42) unter Umgebung der Spindel (27) erstreckt, welche sich mit Spiel durch den Halter (40) erstreckt.

4. Ventil nach Anspruch 3, **dadurch gekennzeichnet, daß** die Spindel im Bereiche des Behälters (40) mit einem Kanal (44) versehen ist, welcher sich von beispielsweise dem Bereich in einem Hohlraum im Halter (40) bis zur freien Endfläche des Ventilkörpers (25) erstreckt, um stets eine Kommunikation zwischen der Kammer (42) und dem Rücklaufzweig zu gestatten.

5. Ventil nach Anspruch 3, **dadurch gekennzeichnet, daß** die Feder sich am Boden (38) abstützt und mit ihrem anderen Ende an dem einstellbaren Stopporgan (45) ruht, welches mit einer gabelähnlichen Seite (46) eine längslaufende Rippe (47) auf der Innenseite des Ventiloberstückes in der Ventilkammer umgreift.

6. Ventil nach Anspruch 3, **dadurch gekennzeichnet, daß** das andere Ende (48) der Spindel (27) im Profil vorzugsweise kreisrund und im Durchmesser reduziert ist, um einen Absatz (49) zu bilden, auf dem der Membranteller (50) ruht mit radialer Erstreckung im Verhältnis zur Spindel, daß auf dem Membranteller seinerseits die Membrane (51) ruht, deren profilierte Kante (52) zwischen einer Schalenkante (28) und einem Deckel festgehalten ist, um die Kammer (42) von einer Nebenkammer (53) in einem Aufbau zu trennen, wo das Spindelende fiei oder blind endet, und von wo die Leitung (22) ausgeht.

7. Ventil nach Anspruch 6, **dadurch gekennzeichnet, daß** das andere Ende (48) der Spindel mit einem Sechskantloch (55) versehen ist zur Aufnahme eines entsprechend ausgeführten Endes (56) eines Schaftes (57) eines Werkzeuges (58) zur Einstellung des Differenzdruckniveaus.

8. Ventil nach wenigstens einem der Ansprüche 1-7, **dadurch gekennzeichnet, daß** zur völligen Schließung des Ventils der zentrale Anschluß (32), der auf den Aufbau (30) aufgeschraubt ist, dazu vorgesehen ist heruntergeschraubt zu werden in Richtung des anderen Spindelendes, um dieses abwärts zu bewegen, bis der Ventilkörper am Sitzt anliegt, zu welchem Zwecke im oberen Ende des zentralen Anschlußes (32) eine Sechskantöffnung (60) angeordnet ist zur Einführung eines Schlüssels, wobei die Membrane dazu vorgesehen ist, dieser Schließbewegung nicht zu folgen, indem sie nicht mit dem Membranteller verbunden ist, sondern sie an genanntem Spindelende entlanggleiten kann zur Vermeidung von nachteiligen Dehnungen und Bewältigung von starken Überdrücken.

9. Ventil nach Anspruch 1, **dadurch gekennzeichnet, daß** die Membrane (51) eine Spezialprofilierung aufweist, welche die Tellerkante einschließt.

## Revendications

1. Soupape de réglage automatique (20) conçue pour maintenir à un niveau constant, la pression différentielle dans un système de chauffage ou de refroidissement (1), ladite soupape (20) étant, comme il se doit, raccordée, dans un circuit de retour (16) du système (1), entre un ou plusieurs radiateurs (8, 9) et un circuit de retour principal (4) et, via un conduit (22), étant raccordée au conduit d'alimentation (5) du système (1) entre un conduit d'alimentation (2) et lesdits radiateurs (8, 9), ladite soupape (20) comprenant un corps de soupape (23), une pièce supérieure (26) raccordée au corps de soupape (23), une tige (27) montée à l'intérieur dudit corps de soupape (23) et de ladite pièce supérieure (26) et possédant un cône de soupape (25) à une extrémité, conçu pour agir de manière réciproque avec un siège (24) dans ledit corps de soupape (23), ladite tige (27) étant entourée par un ressort de compression (43) qui est supporté par un élément d'arrêt apte à se déplacer en direction axiale, mais non rotatif, et ladite tige (27) supportant une membrane (51) qui, via un disque de membrane (50), agit sur la tige (27) dans sa direction de fermeture à l'encontre de l'action exercée par ledit ressort (43), **caractérisée en ce que** l'élément d'arrêt (45) est vissé sur la tige (27) de façon à pouvoir modifier sa position axiale par rapport à la tige (27) à l'aide d'un outil (58) qui transfère un mouvement rotatif depuis l'extérieur de la soupape à la tige, **en ce que** la tige (27) s'étend à travers la membrane (51) et peut être réglée de manière prédéterminée en état de marche à l'aide dudit outil (58) via une rotation par rapport à l'élément d'arrêt (45), **en ce que** la membrane 51 est supportée avec du jeu par le disque (50) ou encore est fixée à ce dernier, et **en ce que** la membrane (51) et le disque de membrane (50) ou encore une unité qui comprend la membrane et le disque de membrane, sont montés, de manière apte à se déplacer en direction axiale, sur l'autre extrémité (48) de la tige (27) pour pouvoir être soulevés et pour pouvoir glisser via un trou central (54) le long de ladite autre extrémité de tige (48), et **en ce que** la pièce supérieure (26) de la soupape est vissée dans le corps de soupape (23) et est munie, à son extrémité qui se détourne dudit corps, d'un élargissement (28) en forme de cuvette qui est renfermé par un couvercle (29) comportant une pièce rapportée centrale (30) qui englobe un raccord latéral (31) pour ledit conduit (22), et **en ce que** la pièce rapportée possède également un raccord axial central (32) qui normalement est fermé de l'extérieur.

2. Soupape selon la revendication 1, **caractérisée en ce qu'**un élément en caoutchouc (34) possédant un espace libre central, axial, normalement comprimé ou obstrué (35) vient se loger dans ledit raccord axial central (32) qui normalement est fermé de l'extérieur à l'aide d'un bouchon à visser (33), élément en caoutchouc à travers lequel on peut insérer une sonde de mesure à des fins de raccordement d'un équipement de mesure.

3. Soupape selon la revendication 1 ou 2, **caractérisée en ce que** ledit cône (25) est inséré dans un tube en plastique (36) dans une ouverture axiale (37) pratiquée dans la pièce supérieure (26) de la soupape, ladite ouverture étant limitée dans la direction s'écartant du circuit de retour par une base (38) comportant un trou axial central (39) dans lequel est inséré un support (40) qui, dans l'ouverture, verrouille ledit tube (36) par friction à l'aide d'une portion quarante et un en forme de disque qui, à l'intérieur du trou (39), fait office de guide pour la tige (27) et qui, dans une chambre 42 au-delà de la base 38 dans la pièce supérieure de la soupape, peut faire office de support ou de repère de positionnement pour le ressort de compression (43) qui s'étend en direction axiale à travers ladite chambre (42) et entoure la tige (27) qui, avec du jeu, s'étend à travers ledit support (40).

4. Soupape selon la revendication 3, **caractérisée en ce que** la tige, dans la zone du support (40), est munie d'un canal (44) qui s'étend par exemple depuis la zone située au sein d'une cavité pratiquée dans le support (40) jusqu'à la surface terminale libre du cône (25) dans le but de toujours établir une communication entre la chambre (42) et le circuit de retour.

5. Soupape selon la revendication 3, **caractérisée en ce que** le ressort (43) est supporté par la base (38), en venant buter avec son autre extrémité contre l'élément d'arrêt réglable (45) qui enserre, à l'aide de son côté (46) en forme de fourche, une nervure longitudinale (47) sur le côté interne de la pièce supérieure de la soupape dans la chambre de soupape.

6. Soupape selon la revendication 3, **caractérisée en ce que** l'autre extrémité (48) de la tige (27) possède une section transversale circulaire et un diamètre réduit dans le but de former un gradin (49) sur lequel est supporté le disque de membrane (50), qui s'étend en direction radiale par rapport à la tige, **en ce que** la membrane est supportée à son tour par le disque de membrane, le bord façonné (52) de la membrane étant retenu entre un bord (28) en forme de cuvette et un couvercle (29) et la membrane étant conçue pour séparer la chambre (42) d'une chambre secondaire (53) dans une pièce rapportée (30) dans laquelle aboutit la tige librement ou sans connexion et à partir de laquelle s'étend le conduit (22).

7. Soupape selon la revendication 6, **caractérisée en ce que** l'autre extrémité (48) de la tige est munie d'un trou hexagonal (55) conçu pour recevoir une extrémité (56), conçue de manière correspondante, d'un arbre (57) d'un outil (58) pour un réglage du niveau de la pression différentielle.

8. Soupape selon l'une quelconque des revendications 1 à 7, **caractérisé en ce que**, dans le but de fermer complètement la soupape, le raccord central (32), qui est vissé dans la pièce rapportée (30), est conçu pour s'abaisser en direction de l'autre extrémité de la tige dans le but de déplacer cette dernière vers le bas, jusqu'à ce que le cône vienne buter contre le siège et, pour cette raison, une ouverture hexagonale (60) est prévue dans l'extrémité supérieure du raccord central (32) pour pouvoir y introduire une clé, la membrane n'étant pas à même de suivre ce mouvement de fermeture étant donné qu'elle n'est pas fixée au disque de membrane, mais étant à même de glisser le long de ladite extrémité de tige dans le but d'éviter des contraintes dangereuses et d'éliminer des surpressions importantes éventuelles.

9. Soupape selon la revendication 1, **caractérisée en ce que** la membrane (51) possède une configuration spécifique qui renferme le bord du disque.
